# EUROPEAN PATENT APPLICATION

(11) **EP 4 607 181 A1**
(43) Date of publication of application: **27.08.2025**
(21) Application number: 24775103.5
(22) Date of filing: 07.03.2024
(51) Int. Cl.: G01N 21/88, G01N 21/89, G01N 21/892, G06T 7/00, G06T 7/30, H01M 10/04, H01M 4/04

(54) **APPARATUS FOR MANUFACTURING SECONDARY BATTERY, AND METHOD FOR MANUFACTURING SECONDARY BATTERY BY USING SAME**

(30) Priority: 22.03.2023 KR 20230037224; 04.08.2023 KR 20230102390
(71) Applicant: LG Energy Solution, Ltd., Seoul 07335 (KR)
(72) Inventor: BAE, Ho Jin, Daejeon 34122 (KR)
(74) Representative: Plasseraud IP
(86) International application number: PCT/KR2024/002976
(87) International publication number: WO 2024/196055

(57) **Abstract**

A secondary battery manufacturing apparatus according to example embodiments includes an analyzer configured to generate a merged image including a plurality of portions of a material sheet, based on the plurality of images of the material sheet. The analyzer is configured to determine a spatial frequency of the periodic defects of the material sheet, based on the merged image.

## Description

### [Technical Field]

The present invention relates to a secondary battery manufacturing apparatus and a secondary battery manufacturing method using the same. The present application claims the benefit of priority based on Korean Patent Application No. 10-2023-0037224, filed on March 22, 2023 and Korean Patent Application No. 10-2023-0102390, filed on August 4, 2023, and the entire contents of the Korean patent applications are incorporated herein by reference.

### [Background Art]

A secondary battery can be charged and discharged a plurality of times unlike a primary battery. Secondary batteries have been widely used as energy sources for various types of wireless devices such as handsets, laptop computers, and cordless vacuum cleaners. Recently, owing to improved energy density and economies of scale, manufacturing costs of electric-powered hybrid electric vehicles (HEVs) and battery electric vehicles (BEVs) have dramatically decreased and a range of BEVs has increased to the same level as that of fuel vehicles, and thus, a main use of secondary batteries is moving from mobile devices to mobility.

A basic unit of a secondary battery is a battery cell. Battery cells are classified into cylindrical batteries in which an electrode assembly is built in a cylindrical metal can, prismatic batteries in which an electrode assembly is built in a prismatic metal can, and pouch-type batteries in which an electrode assembly is built in a pouch case of aluminum laminate sheet, according to a shape of a battery case.

### [Disclosure]

### [Technical Problem]

A technical idea of the present invention is directed to providing an apparatus for manufacturing a secondary battery with improved reliability and a method of manufacturing a secondary battery using the same.

### [Technical Solution]

According to example embodiments of the present invention, a secondary battery manufacturing apparatus includes: a first roll and a second rolls which are configured to move a material sheet; an inspector configured to generate a plurality of images by photographing a plurality of portions of the material sheet, wherein some of the plurality of images include periodic defects; and an analyzer configured to generate a merged image including the plurality of portions of the material sheet, based on the plurality of images of the material sheet, in which the analyzer is configured to determine a spatial frequency of the periodic defects of the material sheet, based on the merged image.

The merged image may be generated by merging the plurality of images in a first direction in which the material sheet extends.

Each of the plurality of images may include an identification mark of the first roll or the second roll, and the analyzer may merge the plurality of images, based on the identification mark.

The analyzer may prevent duplication of the plurality of portions of the material in the merged image, based on the identification mark.

The merged image may extend in the first direction in which the material sheet extends and a second direction perpendicular to the first direction.

The determining of the spatial frequency of the periodic defects may include performing fourier transform on the merged image in the first direction to generate a frequency domain image of the merged image.

The fourier transform may be discrete fourier transform.

The analyzer may be configured to determine the first roll or the second roll corresponding to a frequency with an intensity exceeding a threshold value in the frequency domain image.

The performing of the fourier transform on the merged image may include dividing the merged image into a plurality of pixel arrays extending in the first direction and arranged in the second direction, and performing the fourier transform on each of the plurality of pixel arrays.

The fourier transform may be fast fourier transform.

The performing of the fourier transform on the merged image may include generating a compressed image by adding values of pixels of the merged image that overlap in the second direction together, and performing the fourier transform on the compressed image.

The secondary battery manufacturing apparatus may further include pressing rolls configured to press the material sheet.

The secondary battery manufacturing apparatus may further include die coaters configured to coat the material sheet with an electrode slurry.

According to example embodiments provide a secondary battery manufacturing apparatus. The secondary battery manufacturing apparatus includes: a conveyor belt configured to move a material sheet; an inspector configured to generate a plurality of images by photographing a plurality of portions of the material sheet; and an analyzer configured to generate a merged image including the plurality of portions of the material sheet, based on the plurality of images of the material sheet, in which the analyzer is configured to analyze a spatial frequency of periodic defects of the material sheet, based on the merged image.

The secondary battery manufacturing apparatus may further include a laser notcher configured to emit laser beams to the material sheet.

According to example embodiments provide a secondary battery manufacturing method. The secondary battery manufacturing method includes: generating a plurality of images of a material sheet by photographing a plurality of portions of the material sheet, wherein the material sheet is moved by a first roll and a second roll; generating a merged image including the plurality of portions of the material sheet, based on the plurality of images of the material sheet; and performing frequency analysis on the merged image.

Each of the plurality of images may include an identification mark of the first roll or the second roll, and the plurality of images may be merged based on the identification mark.

The secondary battery manufacturing method may further include determining a spatial frequency of periodic defects of the material sheet, based on the frequency analysis performed on the merged image.

The merged image may extend in the first direction in which the material sheet extends and a second direction perpendicular to the first direction, and the determining of the spatial frequency of the periodic defects may include performing fourier transform on the merged image in the first direction to generate a frequency domain image of the merged image.

The fourier transform may be fast fourier transform.

The performing of the fourier transform on the merged image may include dividing the merged image into a plurality of pixel arrays extending in the first direction and arranged in the second direction, and performing the fourier transform on each of the plurality of pixel arrays.

The performing of the fourier transform on the merged image may include generating a compressed image by adding values of pixels of the merged image that overlap in the second direction together, and performing the fourier transform on the compressed image.

The secondary battery manufacturing method may further include determining, as a cause of the periodic defect, a first roll or a second roll corresponding to a frequency with an intensity exceeding a threshold value in the frequency domain image.

The secondary battery manufacturing method may further include generating an alarm including information about the cause of the periodic defect.

According to example embodiments provide a secondary battery manufacturing method. The secondary battery manufacturing method includes: generating a plurality of images of a material sheet by photographing a plurality of portions of the material sheet, wherein the material sheet is unwound from a first material roll by an unwinder and wound into a second material roll by a rewinder; generating a merged image including the plurality of portions of the material sheet, based on the plurality of images of the material sheet; performing fourier transform on the merged image to generate a frequency domain image of the merged image; and determining a cause of a periodic defect of the material sheet, based on the frequency domain image.

The frequency domain image may represent an intensity-frequency distribution, and the cause of the periodic defect may be determined based on a comparison between an intensity of the frequency domain image and a threshold value.

### [Advantageous Effects]

According to example embodiments of the present invention, a cause of periodic defects of a material sheet can be identified by performing frequency analysis on an image of the material sheet that includes information about the defects, in addition to detecting the defects of the material sheet occurring during the manufacture of a secondary battery. Accordingly, an element causing the periodic defects can be quickly repaired, and the reliability of a secondary battery manufacturing apparatus and a secondary battery manufacturing method using the same can be improved.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

### [Brief Description of the Drawings]

FIG. 1 is a flowchart of a secondary battery manufacturing method according to example embodiments.
FIG. 2 is a diagram for describing a secondary battery manufacturing apparatus according to example embodiments.
FIGS. 3 and 4 are diagrams for describing a secondary battery manufacturing method according to example embodiments.
FIG. 5 is a flowchart of a secondary battery manufacturing method according to example embodiments.
FIG. 6 is a diagram for describing a secondary battery manufacturing method according to example embodiments.
FIG. 7 is a flowchart of a secondary battery manufacturing method according to example embodiments.
FIG. 8 is a diagram for describing a secondary battery manufacturing method according to example embodiments.
FIG. 9 is a diagram for describing a secondary battery manufacturing apparatus according to other example embodiments.
FIG. 10 is a diagram for describing a secondary battery manufacturing apparatus according to other example embodiments.
FIG. 11 is a diagram for describing a secondary battery manufacturing apparatus according to other example embodiments.
FIG. 12 is a diagram for describing a secondary battery manufacturing apparatus according to other example embodiments.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts matching corresponding to the present invention on the basis of the principle that the inventor(s) of the application can appropriately define the terms or expressions to optimally explain the present invention.

Therefore, embodiments set forth herein and configurations illustrated in the drawings are only embodiments of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

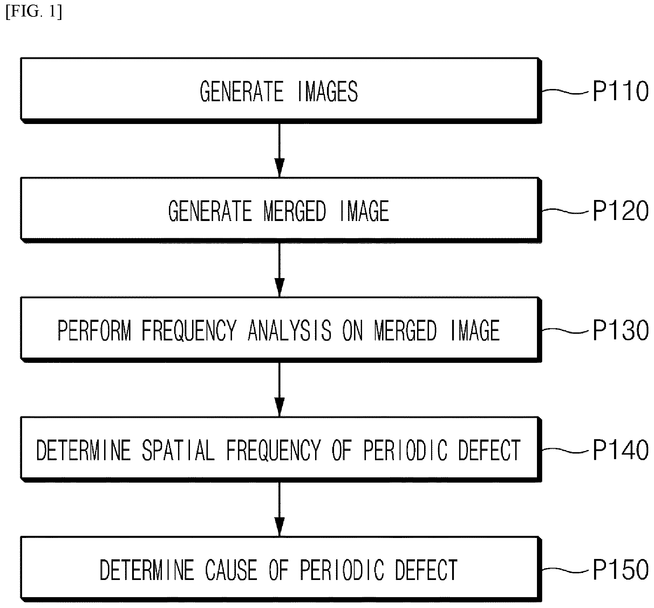

FIG. 1 is a flowchart of a secondary battery manufacturing method according to example embodiments.

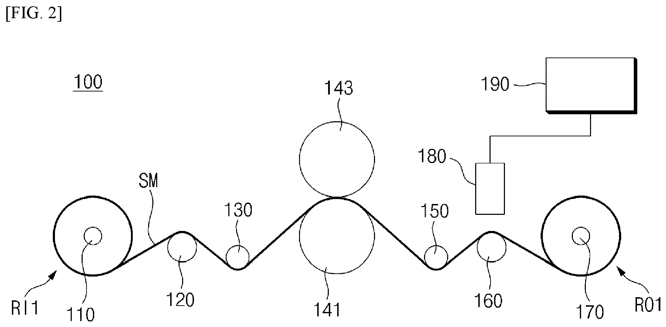

FIG. 2 is a diagram for describing a secondary battery manufacturing apparatus 100 according to example embodiments.

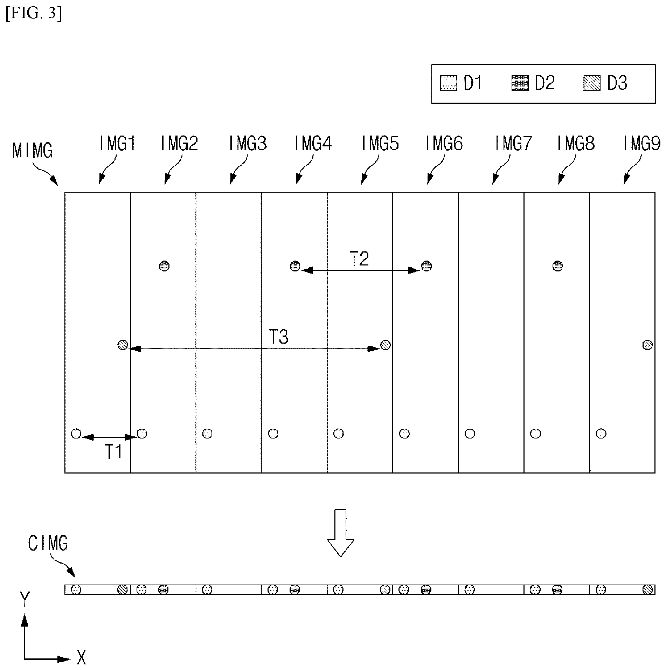

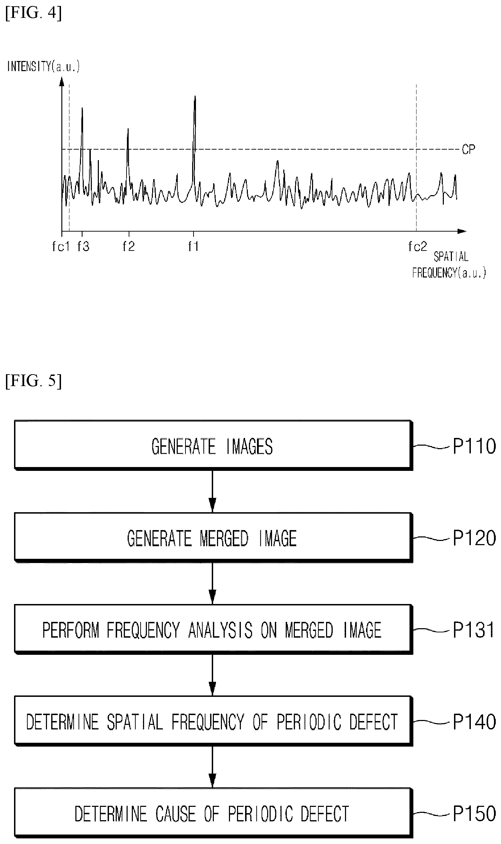

FIGS. 3 and 4 are diagrams for describing a secondary battery manufacturing method according to example embodiments.

Referring to FIGS. 1 to 3, in P110, a plurality of images IMG1, IMG2, IMG3, IMG4, IMG5, IMG6, IMG7, IMG8, and IMG9 (hereinafter, IMG1 to IMG9) may be generated. The plurality of images IMG1 to IMG9 may represent different portions of a material sheet SM1 processed by the secondary battery manufacturing apparatus 100. Each of the plurality of images IMG1 to IMG9 may be generated by an inspector 180 of the secondary battery manufacturing apparatus 100.

According to example embodiments, the secondary battery manufacturing apparatus 100 may include an unwinder 110, a plurality of rolls 120, 130, 150, and 160, pressing rolls 141 and 143, a rewinder 170, the inspector 180, and an analyzer 190.

The unwinder 110 may be configured to rotate a material roll RI1 to unwind a material sheet SM1 from the material roll RI1. The material roll RI1 and the material sheet SM1 may include materials processed by a roll-to-roll process. The material roll RI1 and the material sheet SM1 may include, but are not limited to, electrodes such as positive and negative electrodes, pouch films, and separators.

The material sheet SM1 may be moved by the rotational driving of the plurality of rolls 120, 130, 150, and 160. The plurality of rolls 120, 130, 150, and 160 may be interposed between the unwinder 110 and the rewinder 170. The plurality of rolls 120, 130, 150, and 160 may have different diameters. Some of the plurality of rolls 120, 130, 150, and 160 may have different circumferences. Some of the plurality of rolls 120, 130, 150, and 160 may have the same circumference and diameter.

The plurality of rolls 120, 130, 150, and 160 may have synchronized circumferential speeds. That is, at least some of the plurality of rolls 120, 130, 150, and 160 may have different diameters but the circumferential speeds of the plurality of rolls 120, 130, 150, and 160 may be substantially the same. Accordingly, at least some of the plurality of rolls 120, 130, 150, and 160 may have different rotation frequencies.

The pressing rolls 141 and 143 may be interposed between the rolls 120 and 130 and the rolls 150 and 160. A diameter of each of the pressing rolls 141 and 143 may be greater than a diameter of each of the plurality of rolls 120, 130, 150, and 160. One of the pressing rolls 141 and 143 may rotate and the other may be stopped. Each of the pressing rolls 141 and 143 may rotate in opposite directions or in the same direction.

Each of the pressure rolls 141 and 143 may apply pressure to the material sheet SM1 transmitted by rotation of the rolls 120 and 130. Accordingly, a planarization process or a roll pressing process may be performed on the material sheet SM1.

The material sheet SM1 is stored in a wound state for a certain time and thus includes curls. The curls may cause reliability issues in a process of manufacturing a secondary battery, e.g., packaging of an electrode assembly using a pouch film. When the planarization process is performed on the material sheet SM1, curls on the material sheet SM1 may be removed or reduced, thereby improving reliability of manufacturing a secondary battery.

Here, the pouch film PF may include an inner resin layer, a metal layer, and an outer resin layer. The inner resin layer may have thermal adhesion, thus enabling sealing of the pouch film PF. The inner resin layer may include, for example, a polyolefin-based material. The metal layer may include an alloy of iron, carbon, chromium and manganese, an alloy of iron, chromium and nickel, or aluminum.

The pouch film PF may be used to manufacture a pouch type battery cell. A battery cell is a basic unit of a lithium ion battery, i.e., a secondary battery. The battery cell includes an electrode assembly, an electrolyte, and a case. Battery cells are classified into a lithium ion battery, a lithium ion polymer battery, a lithium polymer battery, etc. according to a configuration of an electrode assembly and an electrolyte. A market share of lithium ion polymer batteries in the field of secondary battery is increasing due to a low possibility of leakage of an electrolyte and easiness in manufacturing.

The pouch type battery cell may include an electrode assembly and a pouch case in which the electrode assembly is embedded. The pouch case may be provided by a forming process and a sealing process of the pouch film PF.

A thickness of the positive electrode plate may range from about 3 µm to about 500 µm. The positive electrode plate may not cause a chemical change in a finally manufactured secondary battery and may have high conductivity. The positive electrode plate may include, for example, stainless steel, nickel, titanium, baked carbon, and aluminum. The positive electrode plate may include stainless steel surface-treated with carbon, nickel, titanium, silver, or the like. A surface of the positive electrode plate may include a fine uneven structure to increase the adhesion of the active material. The positive electrode plate may be in the form of film, sheet, foil, net, porosity, foam, nonwoven fabric or the like.

A thickness of the negative electrode plate may be in a range of about 3 µm to about 500 µm. The negative electrode plate may not cause a chemical change in a finally manufactured secondary battery and may have high conductivity. The negative electrode plate may include copper, stainless steel, aluminum, nickel, titanium, baked carbon, and aluminum-cadmium alloy. The negative electrode plate may include stainless steel surface-treated with carbon, nickel, titanium, silver, or the like. A surface of the negative electrode plate may include a fine uneven structure to increase the adhesion of the active material. The negative electrode plate may be in the form of film, sheet, foil, net, porosity, foam, nonwoven fabric or the like.

The positive electrode active material is a material that may cause an electrochemical reaction. The positive electrode active material may be a lithium transition metal oxide. For example, the positive electrode active material may include: a layered compound substituted with one or more transition metal, e.g., lithium cobalt oxide (LiCoO₂) or lithium nickel oxide (LiNiO₂); lithium manganese oxide substituted with one or more transition metal; lithium nickel-based oxide expressed by a chemical formula of LiNi_{1-y}M_{y}O₂ (here, M is Co, Mn, Al, CU, Fe, Mg, B, Cr, Zn or Ga, and 0.01≤y≤0.7); lithium nickel cobalt manganese compound oxide expressed by a chemical formula of Li_{1+z}Ni_{d}Mn_{c}Co_{1-(b+c+d)}M_{d}O₍₂₋ₑ₎A, e.g., Li_{1+z}Ni_{1/3}CO_{1/3}Mn_{1/3}O₂ or Li_{1+zN}i_{0.4}Mn_{0.4}Co_{0.2}O₂ (here, -0.5≤z≤0.5, 0.1≤b≤0.8, 0.1≤c≤0.8, 0≤d≤0.2, 0≤e≤0.2, b+c+d<1, M is Al, Mg, Cr, Ti, Si or Y, and A is F, P or Cl); or olivine-based lithium metal phosphate expressed by a chemical formula of Li₁₊ₓM_{1-y}M'_{y}PO_{4-z}X_{z} (here, M is a transition metal, and more particularly, Fe, Mn, Co or Ni, M' is Al, Mg or Ti, X is F, S or N, -0.5≤x≤+0.5, 0≤y≤0.5, and 0≤z≤0.1).

For example, the negative electrode active material may include, for example, carbon such as non-graphitized carbon or graphite-based carbon. The negative electrode active material may include, for example, a metal composite oxide such as LiₓFe₂O₃ (0≤x≤1), LixWO₂ (0≤x≤1), or SnₓMe₁₋ₓMe'_{y}O_{z} (here, Me is Mn, Fe, Pb, or Ge, Me' is Al, B, P, Si, a Group I element, a Group II element or a Group III element of the periodic table, or halogen, 0<x≤1, 1≤y≤3, and 1≤z≤8). The negative electrode active material may include, for example, lithium metal, lithium alloy, silicon-based alloy, and tin-based alloy. The negative electrode active material may include, for example, a metal oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, or Bi₂O₅. The negative electrode active material may include, for example, a conductive polymer such as polyacetylene, a Li-Co-Ni-based material, etc.

The roll pressing process is a process of pressing an electrode plate coated with the active material to planarize and thin a surface of the electrode of the secondary battery. By performing the roll pressing process, a bonding force between the surface of the electrode plate and the active material may be enhanced. Due to the enhancement of the bonding force between the surface of the electrode plate and the active material, the movement of lithium ions of the electrode may be promoted, thereby improving power and performance of a finally manufactured secondary battery.

The material sheet SM1 transferred by the rolls 150 and 160 may be wound by the rewinder 170. A material roll RO1 may be providedbywinding the material sheet SM1.

The inspector 180 may be configured to inspect the appearance of the material sheet SM1. The inspector 180 may be configured to inspect the appearance of the material sheet SM1 in a non-contact manner, similar to an image-based vision inspection device. The inspector 180 may include one or more cameras. The inspector 180 may be configured to determine defects of a plurality of portions of the material sheet SM1, e.g., foreign substances, stain, surface defects, scratches, dents, perforations, protrusions, depressions, nucleated scratches, and nucleated scratches, based on a plurality of images IMG1 to IMG9 taken from one or more cameras. The inspector 180 may be configured to determine uniformity of distribution of a coating layer including an active material and a binder. The inspector 180 may be configured to determine the positions of defects D1, D2, and D3 in the plurality of images IMG1 to IMG9, based on the two-dimensional (2D) light intensity profile (or a 2D reflectance profile) of the plurality of images IMG1 to IMG9.

The analyzer 190 may be configured to analyze a result of inspection performed by the inspector 180. More specifically, the analyzer 190 may generate a merged image MIMG in P120, perform frequency analysis on the merged image MIMG in P130, determine a spatial frequency of a periodic defect in P140, and determine a cause of the periodic defect in P150.

The analyzer 190 may be a computing device such as a workstation computer, a desktop computer, a laptop computer, or a tablet computer. The analyzer 190 may be configured as a separate hardware component or be separate software included in each hardware component. The analyzer 190 may be a simple controller, a microprocessor, a complex processor such as a CPU or a GPU, a processor configured by software, dedicated hardware, or firmware. The analyzer 190 may be implemented, for example, by a general-purpose computer or application-specific hardware such as a digital signal process (DSP), a field-programmable gate array (FPGA) or an application-specific integrated circuit (ASIC).

According to some embodiments, an operation of the analyzer 190, which will be described below, may be implemented by instructions stored in a machine-readable medium that is readable and executable by one or more processors. Here, the machine-readable medium may include an arbitrary mechanism for storing and/or transmitting information in a form readable by a machine (e.g., a computing device). For example, machine-readable media may include a read-only memory (ROM), a random access memory (RAM), magnetic disk storage media, optical storage media, flash memory devices, electrical, optical, acoustic, or other types of radio signals (e.g., carrier waves, infrared signals, digital signals, etc.), and other signals.

Firmware, software, routines, and instructions may also be configured to perform the above-described operation of the analyzer 190 or processes to be described below. However, the above description is provided only for convenience of description, and it should be understood that the above-described operation of the analyzer 190 may be performed by a computing device, a processor, a controller, or other devices for executing firmware, software, routines, instructions, etc.

Thereafter, in P120, the merged image MIMG may be generated. The analyzer 190 may be configured to merge the plurality of images IMG1 to IMG9 to generate the merged image MIMG. Each of the plurality of images IMG1 to IMG9 may extend in an X-axis direction and a Y-axis direction. The X-axis direction may be a direction in which the material sheet SM1 extends. The Y-axis direction may be a direction in which the material sheet SM1 is moved. The Y-axis direction may be substantially perpendicular to the X-axis direction. The Y-axis direction may be a width direction of the material sheet SM1. Each of the plurality of images IMG1 to IMG9 may correspond to a field of view of the inspector 180 and thus may include portions of the material sheet SM1. The analyzer 190 may provide the merged image MIMG obtained by connecting the plurality of images IMG1 to IMG9 in the X-axis direction.

Each of the plurality of images IMG1 to IMG9 may represent defects D1, D2, and D3 of the material sheet SM1. Accordingly, the merged image MIMG may also include the defects D1, D2, and D3.

In the merged image MIMG, each of the defects D1, D2, and D3 may be periodically repeated. In the merged image MIMG, each of the defects D1, D2, and D3 may be repeated in the X-axis direction at intervals of a certain spatial period. Accordingly, each of the defects D1, D2, and D3 may be referred to as a periodic defect.

For example, the defect D1 may be repeated at intervals of a spatial period T1, the defect D2 may be repeated at intervals of a spatial period T2, and the defect D3 may be repeated at intervals of a spatial period T3. The spatial periods T1, T2, and T3 may be different from one another. The spatial period T1 may be shorter than the spatial period T2. The spatial period T2 may be shorter than the spatial period T3.

Each of the spatial periods T1, T2, and T3 may correspond to spatial frequencies defined as reciprocals thereof. Units of the spatial periods T1, T2, and T3 may be m or the spatial periods T1, T2, and T3 may be standardized non-dimensional amounts. Accordingly, units of spatial frequencies may be 1/m or the spatial frequencies may be standardized non-dimensional amounts. For example, when the spatial period T1 is about 1/2 [m], the spatial period T2 is about 2 [m], and the spatial period T3 is about 4 [m], a spatial frequency corresponding to the spatial period T1 may be about 2[m⁻¹], a spatial frequency corresponding to the spatial period T2 may be about 1/2[m⁻¹], and a spatial frequency corresponding to the spatial period T3 may be about 1/4[m⁻¹].

Next, referring to FIGS. 1 to 4, in P130, frequency analysis may be performed on the merged image MIMG. The merged image MIMG may include a plurality of pixels in the X-axis direction and the Y-axis direction. The defects D1, D2, and D3 may be represented in the form of coordinates according to positions of the pixels of the merged image MIMG. Here, the position of the pixels may be displayed using a local coordinate system limited to each of the plurality of images IMG1 to IMG9 or a global coordinate system common to the entire merged image MIMG.

In the merged image MIMG, values of pixels with the defects D1, D2, and D3 may be, for example, 1, and values of pixels without the defects D1, D2, and D3 may be, for example, 0. The values of the pixels are only non-limiting examples, and each of the pixels may be given an arbitrary value representing the presence or absence of the defects D1, D2, and D3.

In the present example, a compressed image CIMG may be generated for frequency analysis of the merged image MIMG. The compressed image CIMG may be generated by adding values of pixels overlapping in the Y-axis direction together. Accordingly, the compressed image CIMG may include the same number of pixels as the merged image MIMG in the X-axis direction and includes fewer pixels (e.g., one pixel) than the merged image MIMG in the Y-axis direction. The analyzer 190 may be configured to perform fourier transform on the compressed image CIMG in the X-axis direction.

In FIG. 3, there is no defect overlapping in the Y-axis direction and thus a value of a pixel overlapping each of the defects D1, D2, and D3 may be 1. Unlike that shown in FIG. 3, when the merged image MIMG includes an additional defect overlapping some of the defects D1, D2, and D3, a value of a pixel of the compressed image CIMG corresponding to the additional defect may be 2 or more.

The fourier transform performed on the compressed image CIMG may be discrete Fourier transform such as fast fourier transform. The fourier transform performed on the compressed image CIMG may be short time fourier transform. An intensity-space frequency graph as shown in FIG. 4 may be provided through the fourier transform in P130. The intensity-space frequency graph as shown in FIG. 4 may be referred to as a frequency domain image.

Next, in P140, a spatial frequency of a periodic defect may be determined. The spatial frequency of the periodic defect may be a value of a spatial frequency exceeding a critical intensity in the frequency domain image. For example, in FIG. 4, intensities corresponding to spatial frequencies f1, f2, and f3 exceed a threshold value CP and thus each of the spatial frequencies f1, f2, and f3 may be a spatial frequency of a periodic defect.

A signal with an intensity less than or equal to the threshold value CP may be treated as noise in determining a spatial frequency of a periodic defect. In addition, a signal with a value that is less than a lower frequency limit fc1 or greater than or equal to an upper frequency limit fc2 may be processed as noise, because there is no element of the secondary battery manufacturing device having a corresponding spatial frequency.

Subsequently, in P150, a cause of the periodic defect may be determined. The determining of the cause of the periodic defect may include calculating the spatial periods T1, T2, and T3, based on the spatial frequencies f1, f2, and f3. According to example embodiments, the spatial periods T1, T2, and T3 may be reciprocals of the spatial frequencies f1, f2, and f3.

The determining the cause of the periodic defect may include determining rolls having a period similar to the spatial periods T1, T2, and T3 among the plurality of rolls 120, 130, 150, and 160 and the pressing rolls 141 and 143. Here, the period similar to the spatial periods T1, T2, and T3 should be understood to mean a period that is in a range set from the spatial periods T1, T2, and T3 calculated from the spatial frequencies f1, f2, and f3. The range set from the spatial periods T1, T2, and T3 includes system errors, negligence errors, and accidental errors that occur inevitably in the calculation of the spatial periods T1, T2, and T3. The range set from each of the spatial periods T1, T2, and T3 is a range including the spatial periods T1, T2, and T3, and may include an upper limit value greater than each of the spatial periods T1, T2, and T3 and a lower limit value less than each of the spatial periods T1, T2, and T3.

According to example embodiments, the spatial periods T1, T2, and T3 may correspond to characteristic lengths of the plurality of rolls 120, 130, 150 and 160 and the pressing rolls 141 and 143. According to example embodiments, the spatial periods T1, T2, and T3 may be the same as the circumferences of some of the plurality of rolls 120, 130, 150 and 160 and the pressing rolls 141 and 143. In addition, multiples (e.g., doubles, triples or quadruples) of the spatial periods T1, T2, and T3 may be the same as the circumferences of some of the plurality of rolls 120, 130, 150, and 160 and the pressing rolls 141 and 143.

Therefore, elements (i.e., some of the plurality of rolls 120, 130, 150, and 160 and the pressing rolls 141 and 143) having characteristic lengths (e.g., circumferences) that are in the range set from the spatial periods T1, T2 and T3 or characteristic lengths (e.g., circumferences) that are in a range set from multiples (e.g., doubles, triples or quadruples) of the spatial periods T1, T2 and T3 may be determined as the cause of the periodic defect.

In a roll-to-roll process, when a cause of a defect occurs in the plurality of rolls 120, 130, 150, and 160 and the pressing rolls 141 and 143, the cause of the defect causes periodic defects D1, D2, and D3 which repeatedly occur in the material sheet SM1. Thus, rapid detection and repair of the periodic defects D1, D2, and D3 are essential to improve the yield of secondary batteries.

The secondary battery manufacturing apparatus 100 and a secondary battery manufacturing method using the same according to example embodiments are capable of determining in real time the occurrence of the periodic defects D1, D2, and D3 and elements of the secondary battery manufacturing apparatus 100 that are a cause of the periodic defects D1, D2, and D3. In particular, even defects occurring at long intervals (i.e., defects with a long characteristic length), such as defects caused by the pressing rolls 141 and 143, the occurrence of periodic faults and their causal factors may be determined. Accordingly, the yield and reliability of manufacturing secondary battery can be improved.

Thereafter, an alarm may be generated. The alarm may include information about the occurrence and cause of a periodic defect (i.e., an element of the secondary battery manufacturing apparatus 100 that causes a periodic cause). The alarm may inform an operator of the occurrence and cause of the periodic defect. When the cause of the periodic defect is determined in P150, the analyzer 190 may be configured to generate a signal for generating an alarm notifying an operator of the cause of the periodic defect. Furthermore, the analyzer 190 may generate a break signal for stopping operations of the elements of the secondary battery manufacturing apparatus 100. The break signal may be transmitted from the analyzer 190 to a controller (e.g., a programmable logic controller (PLC)) configured to control the elements of the secondary battery manufacturing apparatus 100. Accordingly, it is possible to prevent additional defects from occurring in the material sheet SM1 due to the cause of the periodic defect.

### (Second Embodiment)

FIG. 5 is a flowchart of a secondary battery manufacturing method according to example embodiments.

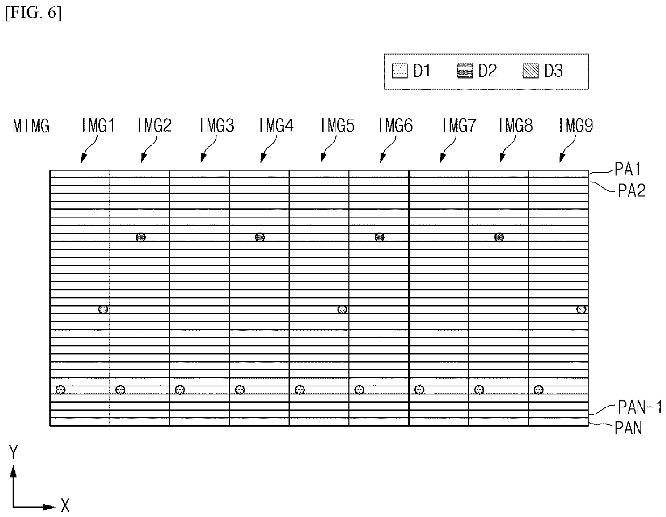

FIG. 6 is a diagram for describing a secondary battery manufacturing method according to embodiments.

The method of FIG. 5 is substantially the same as that described above with reference to FIGS. 1 to 4, except that P131 in which frequency analysis is performed on a merged image. The method of FIG. 5 may be performed by the secondary battery manufacturing apparatus 100 of FIG. 2.

Referring to FIGS. 2, 5, and 6, the performing of the frequency analysis on the merged image in P131 may include performing the frequency analysis directly on a merged image MIMG without generating the compressed image CIMG (see FIG. 3). According to example embodiments, the analyzer 190 may divide the merged image MIMG into a plurality of pixel arrays PA1, PA2, ..., PAN-1, and PAN. According to example embodiments, the analyzer 190 may perform fourier transform on each of the plurality of pixel arrays PA1, PA2, ..., PAN-1, and PAN of the merged image MIMG.

Each of the plurality of pixel arrays PA1, PA2, ..., PAN-1, and PAN may include the same number of pixels as the merged image MIMG in the X-axis direction. Each of the plurality of pixel arrays PA1, PA2, ..., PAN-1, and PAN may include fewer pixels (e.g., one pixel) than than the merged image MIMG in the Y-axis direction. Each of the plurality of pixel arrays PA1, PA2, ..., PAN-1, and PAN may be arranged in the Y-axis direction.

Accordingly, determining a cause of a periodic defect in P150 may include determining a Y-axis direction coordinate of a cause of a periodic defect among the plurality of rolls 120, 130, 150, and 160 and the pressing rolls 141 and 143, in addition to determining the cause of the periodic defect. Accordingly, the plurality of rolls 120, 130, 150, and 160 and the pressing rolls 141 and 143 may be quickly repaired.

### (Third Embodiment)

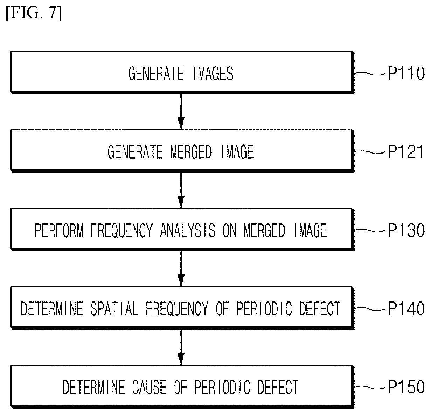

FIG. 7 is a flowchart of a secondary battery manufacturing method according to embodiments.

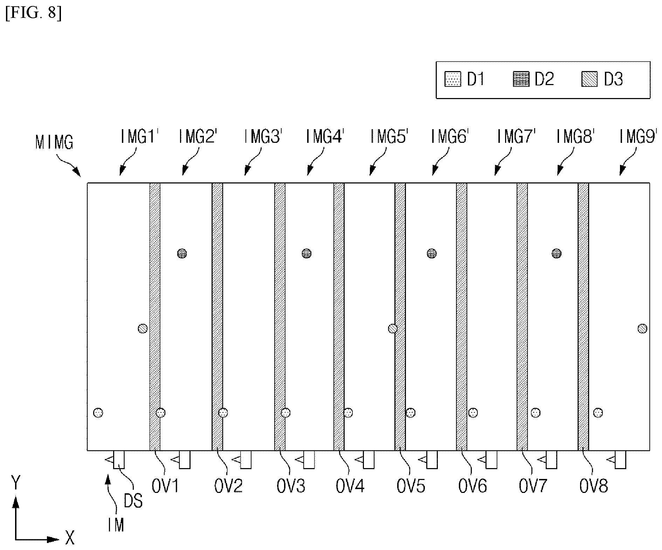

FIG. 8 is a diagram for describing a secondary battery manufacturing method according to example embodiments.

The method of FIG. 7 is substantially the same as that described above with reference to FIGS. 1 to 4, except P121 in in which frequency analysis is performed on a merged image. The method of FIG. 7 may be performed by the secondary battery manufacturing apparatus 100 of FIG. 2.

Referring to FIGS. 2, 7, and 8, a plurality of images IMG1', IMG2', IMG3', IMG4', IMG5', IMG6', IMG7', IMG8', and IMG9' (hereinafter, IMG1' to IMG9') may include overlapping regions OV1, OV2, OV3, OV4, OV5, OV6, OV7, and OV8 (hereinafter, OV1 to OV8). More specifically, the overlapping region OV1 may be included in each of the images IMG1' and IMG2', the overlapping region OV2 may be included in each of the images IMG2' and IMG3', the overlapping region OV3 may be included in each of the images IMG3' and IMG4', the overlapping region OV4 may be included in each of the images IMG4' and IMG5', the overlapping region OV5 may be included in each of the images IMG5' and IMG6', the overlapping region OV6 may be included in each of the images IMG6' and IMG7', the overlapping region OV7 may be included in each of the images IMG7' and IMG8', and the overlapping region OV8 may be included in each of the images IMG8' and IMG9'.

A frequency of capturing the plurality of images IMG1' to IMG9' by the inspector 180 may be synchronized with a transfer speed of the material sheet SM1 so that the overlapping regions OV1 to OV8 may be minimized. When the overlapping regions OV1 to OV8 are not corrected, a spatial period of the defects D1, D2, and D3 may be distorted due to the overlapping regions OV1 to OV8.

According to example embodiments, the plurality of images IMG1' to IMG9' may further include a drive shaft DS of one of the plurality of rolls 120, 130, 150 and 160 and the pressing rolls 141 and 143, in addition to a portion of the material sheet SM1. The drive shaft DS may include an identification mark IM and thus the plurality of images IMG1' to IMG9' may include the identification mark IM. The analyzer 190 may be configured to determine the overlapping regions OV1 to OV8, based on the size and shape of the identification mark IM on the plurality of images IMG1' to IMG9'.

According to example embodiments, in P121, the analyzer 190 may be configured to prevent duplication of the overlapping regions OV1 to OV8 during the generation of the merged image MIMG. Accordingly, it is possible to prevent distortion of a spatial frequency of a periodic defect due to the overlapping regions OV1 to OV8 and improve the reliability of the secondary battery manufacturing apparatus 100 and the secondary battery manufacturing method using the same.

### (Fourth Embodiment)

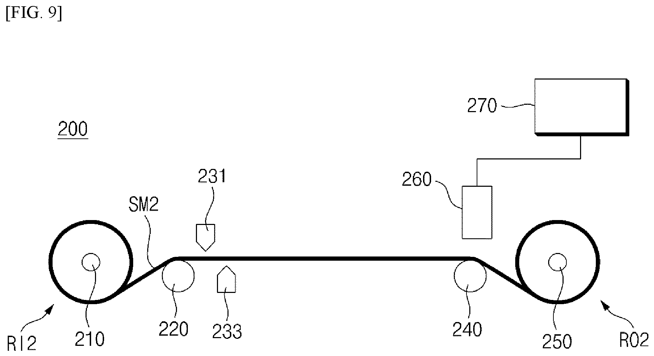

FIG. 9 is a diagram for describing a secondary battery manufacturing apparatus 200 according to other example embodiments.

Referring to FIG. 9, the secondary battery manufacturing apparatus 200 may be a coater device. The secondary battery manufacturing apparatus 200 may include an unwinder 210, a plurality of rolls 220 and 240, die coaters 231 and 233, a rewinder 250, an inspector 260, and an analyzer 270.

The unwinder 210 may be configured to rotate a material roll RI2 to unwind a material sheet SM2 from the material roll RI2. The material roll RI2 and the material sheet SM2 may include a positive electrode plate or a negative electrode plate.

The material sheet SM2 may be moved by the rotational driving of the plurality of rolls 220 and 240. The plurality of rolls 220 and 240 may be interposed between the unwinder 210 and the rewinder 250. The plurality of rolls 220 and 240 may have different diameters. The plurality of rolls 220 and 240 may have different circumferences. Some of the plurality of rolls 220 and 240 may have the same circumference and diameter.

The plurality of rolls 220 and 240 may have the synchronized circumferential speeds. That is, at least some of the plurality of rolls 220 and 240 may have different diameters but the circumferential speeds of the plurality of rolls 220 and 240 may be substantially the same. Accordingly, at least some of the plurality of rolls 220 and 240 may have different rotation frequencies.

The die coaters 231 and 233 may be interposed between the rolls 220 and 240. Each of the die coaters 231 and 233 may be configured to discharge an electrode slurry. The material sheet SM2 may be coated with the electrode slurry discharged by the die coaters 231 and 233.

The material sheet SM2 transferred by the roll 240 may be wound by the rewinder 250. A material roll RO2 may be provided for winding the material sheet SM2.

The inspector 260 may be configured to inspect the appearance of the material sheet SM2. The inspector 260 and the analyzer 270 may be substantially the same as the inspector 180 and the analyzer 190 of FIG. 2, respectively. According to example embodiments, the analyzer 270 may be configured to perform the methods of FIGS. 1, 5, and 7.

### (Fifth Embodiment)

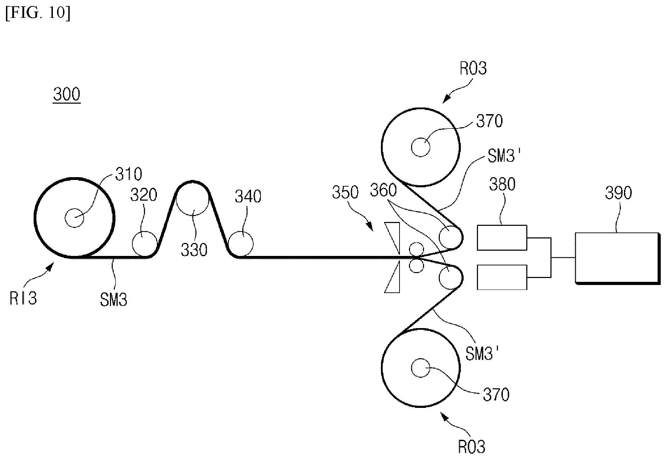

FIG. 10 is a diagram for describing a secondary battery manufacturing apparatus 300 according to other example embodiments.

Referring to FIG. 10, the secondary battery manufacturing apparatus 300 may be a slitting device.

According to example embodiments, the secondary battery manufacturing apparatus 300 may include an unwinder 310, a plurality of rolls 320, 330, 340 and 360, a slitter 350, rewinders 370, inspectors 380, and an analyzer 390.

The unwinder 310 may be configured to rotate a material roll RI3 to unwind a material sheet SM3 from the material roll RI3. The material roll RI3 and the material sheet SM3 may include a positive electrode plate or a negative electrode plate.

The material sheet SM3 may be moved by the rotational driving of the plurality of rolls 320, 330, 340 and 360. The plurality of rolls 320, 330, 340, and 360 may be interposed between the unwinder 310 and the rewinders 370. The plurality of rolls 320, 330, 340, and 360 may have different diameters. The plurality of rolls 320, 330, 340, and 360 may have different circumferences. Some of the plurality of rolls 320, 330, 340, and 360 may have the same circumference and diameter.

The plurality of rolls 320, 330, 340 and 360 may have the synchronized circumferential speeds. That is, at least some of the plurality of rolls 320, 330, 340, and 360 may have different diameters but the circumferential speeds of the plurality of rolls 320, 330, 340, and 360 may be substantially the same. Accordingly, at least some of the plurality of rolls 320, 330, 340, and 360 may have different rotation frequencies.

The slitter 350 may be interposed between the rolls 320, 330 and 340 and the rolls 360. The slitter 350 may cut the material sheet SM3 to provide a plurality of material sheets SM3'. A width of each of the plurality of material sheets SM3' may be less than a width of the material sheet SM3. Although for convenience of illustration, the material sheet SM3 is illustrated as being divided into two material sheets SM3', the technical idea of the present invention should not be understood as being limited thereto in any sense. Those of ordinary skill in the art will be able to easily derive an embodiment in which the material sheet SM3 is divided into three or more material sheets SM3' based on the above description.

The material sheet SM3 transferred by the rolls 360 may be wound by the rewinders 370. Material rolls RO3 may be provided for winding the material sheets SM3'.

The inspectors 380 may be configured to inspect the appearances of the material sheets SM3'. Each of the inspectors 380 may be substantially the same as the inspector 180 of FIG. 2, and the analyzer 390 may be substantially the same as the analyzer 190 of FIG. 2. According to example embodiments, the analyzer 390 may be configured to perform the methods of FIGS. 1, 5, and 7.

### (Sixth Embodiment)

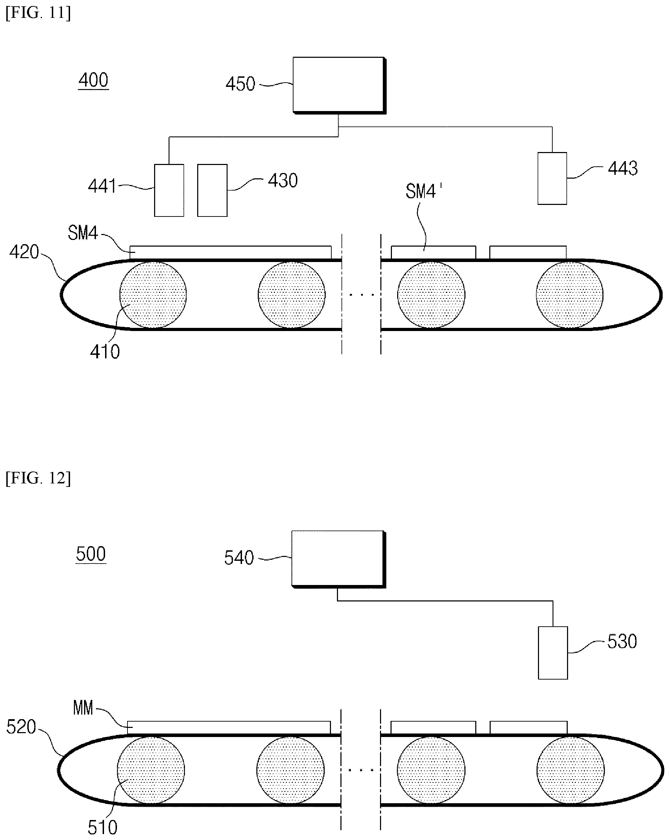

FIG. 11 is a diagram for describing a secondary battery manufacturing apparatus 400 according to other example embodiments.

According to example embodiments, the secondary battery manufacturing apparatus 400 may include driving wheels 410, a conveyor belt 420, a notching device 430, inspectors 441 and 443, and an analyzer 450.

The conveyor belt 420 may transfer a material sheet SM4 by rotation of the driving wheels 410. The material sheet SM4 may be a separator, a pouch film or an electrode.

The notching device 430 may be on the conveyor belt 420. According to example embodiments, the notching device 430 may be a laser notcher configured to emit laser beams onto the material sheet SM4 but is not limited thereto. The notching device 430 may include a punching knife. The notching device 430 may remove uncoated portions of the material sheet SM4 excluding portions for tabs. Materials SM4' separated from the material sheet SM4 may be provided as a result of processing the material sheet SM4 by the notching device 430. The separated materials SM4' may have a size and shape appropriate for use in an electrode of a battery cell.

According to example embodiments, the inspector 441 may be configured to inspect the appearance of the material sheet SM4. The inspector 443 may be configured to inspect the separated materials SM4'. Each of the inspectors 441 and 443 may be substantially the same as the inspector 180 of FIG. 2, and the analyzer 450 may be substantially the same as the analyzer 190 of FIG. 2. According to example embodiments, the analyzer 450 may be configured to perform the methods of FIGS. 1, 5, and 7.

### (Seventh Embodiment)

FIG. 12 is a diagram for describing a secondary battery manufacturing apparatus 500 according to other example embodiments.

According to example embodiments, the secondary battery manufacturing apparatus 500 may include driving wheels 510, a conveyor belt 520, an inspector 530, and an analyzer 540.

The conveyor belt 520 may transfer a material MM by rotation of the driving wheels 510. The material MM may be a battery cell of a secondary battery.

The battery cell is a basic unit of a lithium ion battery, i.e., a secondary battery. The battery cell includes an electrode assembly, an electrolyte, and a case.

The battery cell is classified into a cylindrical battery in which an electrode assembly is built in a cylindrical metal can, a prismatic battery in which an electrode assembly is built in a prismatic metal can, or a pouch-type battery in which an electrode assembly is built in a pouch case of aluminum laminate sheet, according to a shape of a battery case.

An electrode assembly included in a battery case includes a positive electrode, a negative electrode, and a separator interposed between the positive electrode and the negative electrode. The electrode assembly may be classified as a jelly-roll type electrode assembly or a stack type electrode assembly according to a form of assembly. The jelly roll type electrode assembly is manufactured by winding a positive electrode, a negative electrode, and a separator interposed therebetween. The stack type electrode assembly includes a plurality of positive electrodes, a plurality of negative electrodes, and a plurality of separators interposed therebetween that are stacked sequentially.

The positive electrodes may each include a positive electrode current collector and a positive electrode active material. The negative electrodes may each include a negative electrode current collector and a negative electrode active material.

According to example embodiments, the secondary battery manufacturing apparatus 500 may be configured to perform a battery assembly process. According to example embodiments, the secondary battery manufacturing apparatus 500 may be configured to perform one of an electrode stacking process, a pouch cutting process, a pouch forming process, an electrolyte injection process, an formation process, an aging process, and a degassing process.

In the electrode stacking process, an electrode assembly may be provided by stacking a positive electrode, a negative electrode, and a separator. In the pouch cutting process, a pouch film may be cut according to standard requirements. In the pouch forming process, the pouch film may be formed in a shape suitable for housing the electrode assembly. In the electrolyte injection process, the electrolyte may be injected into the battery case. In the formation process, the battery cell may be initially charged and discharged. In the formation process, a solid electrolyte interphase (SEI) layer may be formed. In the aging process, a battery may be stored for a certain time (e.g., 30 minutes to 3 hours) in a controlled temperature and humidity environment. In the degassing process, an air pocket may be cut off to remove an unnecessary gas after the injection of the electrolyte.

According to example embodiments, the inspector 530 may be configured to inspect the appearance of the material MM. The inspector 530 may be substantially the same as the inspector 180 of FIG. 2, and the analyzer 540 may be substantially the same as the analyzer 190 of FIG. 2. According to example embodiments, the analyzer 540 may be configured to perform the methods of FIGS. 1, 5, and 7.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

## Claims

1. A secondary battery manufacturing apparatus comprising:
a first roll and a second rolls which are configured to move a material sheet;
an inspector configured to generate a plurality of images by photographing a plurality of portions of the material sheet, wherein some of the plurality of images include periodic defects; and
an analyzer configured to generate a merged image including the plurality of portions of the material sheet, based on the plurality of images of the material sheet,
wherein the analyzer is configured to determine a spatial frequency of the periodic defects of the material sheet, based on the merged image.

2. The secondary battery manufacturing apparatus of claim 1, wherein the merged image is generated by merging the plurality of images in a first direction in which the material sheet extends.

3. The secondary battery manufacturing apparatus of claim 1, wherein each of the plurality of images includes an identification mark of the first roll or the second roll, and
the analyzer merges the plurality of images, based on the identification mark.

4. The secondary battery manufacturing apparatus of claim 3, wherein the analyzer prevents duplication of the plurality of portions of the material in the merged image, based on the identification mark.

5. The secondary battery manufacturing apparatus of claim 1, wherein the merged image extends in the first direction in which the material sheet extends and a second direction perpendicular to the first direction, and
the determining of the spatial frequency of the periodic defects includes performing fourier transform on the merged image in the first direction to generate a frequency domain image of the merged image.

6. The secondary battery manufacturing apparatus of claim 5, wherein the fourier transform is discrete fourier transform.

7. The secondary battery manufacturing apparatus of claim 5, wherein the fourier transform is fast fourier transform.

8. The secondary battery manufacturing apparatus of claim 5, wherein the analyzer is configured to determine the first roll or the second roll corresponding to a frequency with an intensity exceeding a threshold value in the frequency domain image.

9. The secondary battery manufacturing apparatus of claim 5, wherein the performing of the fourier transform on the merged image comprises:
dividing the merged image into a plurality of pixel arrays extending in the first direction and arranged in the second direction; and
performing the fourier transform on each of the plurality of pixel arrays.

10. The secondary battery manufacturing apparatus of claim 5, wherein the performing of the fourier transform on the merged image comprises:
generating a compressed image by adding values of pixels of the merged image that overlap in the second direction together; and
performing the fourier transform on the compressed image.

11. The secondary battery manufacturing apparatus of claim 1, further comprising pressing rolls configured to press the material sheet.

12. The secondary battery manufacturing apparatus of claim 1, further comprising die coaters configured to coat the material sheet with an electrode slurry.

13. A secondary battery manufacturing apparatus comprising:
a conveyor belt configured to move a material sheet;
an inspector configured to generate a plurality of images by photographing a plurality of portions of the material sheet; and
an analyzer configured to generate a merged image including the plurality of portions of the material sheet, based on the plurality of images of the material sheet,
wherein the analyzer is configured to analyze a spatial frequency of periodic defects of the material sheet, based on the merged image.

14. The secondary battery manufacturing apparatus of claim 13, further comprising a laser notcher configured to emit laser beams to the material sheet.

15. A secondary battery manufacturing method comprising:
generating a plurality of images of a material sheet by photographing a plurality of portions of the material sheet, wherein the material sheet is moved by a first roll and a second roll;
generating a merged image including the plurality of portions of the material sheet, based on the plurality of images of the material sheet; and
performing frequency analysis on the merged image.

16. The secondary battery manufacturing method of claim 15, wherein each of the plurality of images includes an identification mark of the first roll or the second roll, and
the plurality of images are merged based on the identification mark.

17. The secondary battery manufacturing method of claim 15, further comprising determining a spatial frequency of periodic defects of the material sheet, based on the frequency analysis performed on the merged image.

18. The secondary battery manufacturing method of claim 17, wherein the merged image extends in the first direction in which the material sheet extends and a second direction perpendicular to the first direction, and
the determining of the spatial frequency of the periodic defects includes performing fourier transform on the merged image in the first direction to generate a frequency domain image of the merged image.

19. The secondary battery manufacturing method of claim 18, wherein the fourier transform is fast fourier transform.

20. The secondary battery manufacturing method of claim 18, wherein the performing of the fourier transform on the merged image comprises:
dividing the merged image into a plurality of pixel arrays extending in the first direction and arranged in the second direction; and
performing the fourier transform on each of the plurality of pixel arrays.

21. The secondary battery manufacturing method of claim 18, wherein the performing of the fourier transform on the merged image comprises:
generating a compressed image by adding values of pixels of the merged image that overlap in the second direction together; and
performing the fourier transform on the compressed image.

22. The secondary battery manufacturing method of claim 18, further comprising determining, as a cause of the periodic defect, a first roll or a second roll corresponding to a frequency with an intensity exceeding a threshold value in the frequency domain image.

23. The secondary battery manufacturing method of claim 22, further comprising generating an alarm including information about the cause of the periodic defect.

24. A secondary battery manufacturing method comprising:
generating a plurality of images of a material sheet by photographing a plurality of portions of the material sheet, wherein the material sheet is unwound from a first material roll by an unwinder and wound into a second material roll by a rewinder;
generating a merged image including the plurality of portions of the material sheet, based on the plurality of images of the material sheet;
performing fourier transform on the merged image to generate a frequency domain image of the merged image; and
determining a cause of a periodic defect of the material sheet, based on the frequency domain image.

25. The secondary battery manufacturing method of claim 24, wherein the frequency domain image represents an intensity-frequency distribution, and
the cause of the periodic defect is determined based on a comparison between an intensity of the frequency domain image and a threshold value.
